(19) **Europäisches Patentamt / European Patent Office / Office européen des brevets**

(11) **EP 2 831 977 B1**

(12) **FASCICULE DE BREVET EUROPEEN**

(45) Date de publication et mention
de la délivrance du brevet:
**30.10.2019 Bulletin 2019/44**

(21) Numéro de dépôt: **13719911.3**

(22) Date de dépôt: **22.03.2013**

(51) Int Cl.:
$H01M\ 10/42^{(2006.01)}$     $H01M\ 10/44^{(2006.01)}$
$H01M\ 16/00^{(2006.01)}$     $H02J\ 7/14^{(2006.01)}$
$H02J\ 1/00^{(2006.01)}$     $H01M\ 4/24^{(2006.01)}$
$H01M\ 10/052^{(2010.01)}$     $H01M\ 10/30^{(2006.01)}$
$B60L\ 50/40^{(2019.01)}$     $B60L\ 50/16^{(2019.01)}$
$B60L\ 58/12^{(2019.01)}$     $B60L\ 58/20^{(2019.01)}$

(86) Numéro de dépôt international:
**PCT/FR2013/050623**

(87) Numéro de publication internationale:
**WO 2013/144488 (03.10.2013 Gazette 2013/40)**

(54) **PROCÈDE ET SYSTÈME D'ALIMENTATION ÉLECTRIQUE D'UN VÉHICULE AUTOMOBILE HYBRIDE A DOUBLÉ STOCKEURS D'ÉNERGIE ÉLECTRIQUE**

VERFAHREN UND SYSTEM ZUR STROMVERSORGUNG EINES HYBRIDKRAFTFAHRZEUGS MIT ZWEI STROMSPEICHERN

METHOD AND SYSTEM FOR SUPPLYING ELECTRICAL POWER TO A HYBRID MOTOR VEHICLE HAVING DUAL ELECTRICAL POWER STORAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2012 FR 1252766**

(43) Date de publication de la demande:
**04.02.2015 Bulletin 2015/06**

(73) Titulaire: **Valeo Equipements Electriques Moteur 94046 Créteil Cedex (FR)**

(72) Inventeurs:
• **BENCHETRITE, Daniel**
  **F-94000 Creteil (FR)**
• **OUATTARA-BRIGAUDET, Mathilde**
  **F-94000 Creteil (FR)**
• **BAUDESSON, Philippe**
  **F-27220 La Boissiere (FR)**
• **RANIER, Marc**
  **F-94290 Villeneuve Le Roi (FR)**

(74) Mandataire: **Tran, Chi-Hai et al**
**Valeo Systèmes Thermiques**
**8, rue Louis Lormand**
**CS 80517 La Verrière**
**78322 Le Mesnil Saint Denis Cedex (FR)**

(56) Documents cités:
WO-A1-2006/112512     DE-A1-102004 036 042
US-A1- 2007 223 259     US-A1- 2009 212 626

• DE CASTRO R ET AL: "A control allocation approach to manage multiple energy sources in EVs", 2011 IEEE VEHICLE POWER AND PROPULSION CONFERENCE, 2011, XP002689454, Piscataway, NJ, USA DOI: 10.1109/VPPC.2011.6043190 ISBN: 978-1-61284-248-6
• ALIREZA KHALIGH ET AL: "Battery, Ultracapacitor, Fuel Cell, and Hybrid Energy Storage Systems for Electric, Hybrid Electric, Fuel Cell, and Plug-In Hybrid Electric Vehicles: State of the Art", IEEE TRANSACTIONS ON VEHICULAR TECHNOLOGY, IEEE SERVICE CENTER, PISCATAWAY, NJ, US, vol. 59, no. 6, 1 juillet 2010 (2010-07-01), pages 2806-2814, XP011307234, ISSN: 0018-9545

# EP 2 831 977 B1

**Description**

## DOMAINE TECHNIQUE DE L'INVENTION.

La présente invention concerne un procédé d'alimentation électrique d'un véhicule automobile hybride à double stockeurs, ainsi qu'un système d'alimentation électrique d'un véhicule automobile hybride apte à la mise en œuvre de ce procédé.

## ARRIERE PLAN TECHNOLOGIQUE DE L'INVENTION.

Les véhicules automobiles à moteur thermique comportent classiquement un réseau électrique de bord comprenant une batterie, généralement de 12 V, destiné à alimenter en énergie électrique les divers équipements, notamment un démarreur, indispensable pour assurer le démarrage du moteur thermique. Après le démarrage, un alternateur accouplé au moteur thermique assure la charge de la batterie.

De nos jours, le développement de l'électronique de puissance permet d'alimenter et de piloter une seule machine électrique tournante polyphasée réversible qui remplace avantageusement le démarreur et l'alternateur.

Dans un premier temps, cette machine, connue sous le nom d'alterno-démarreur, avait essentiellement pour but de remplir les fonctions autrefois dédiées à l'alternateur et au démarreur, et, accessoirement, de récupérer l'énergie au freinage, ou d'apporter un supplément de puissance et de couple au moteur thermique.

Dans le but d'accroître la puissance et d'améliorer le rendement de l'alterno-démarreur en augmentant sa tension de fonctionnement tout en conservant la possibilité d'utiliser des autres équipements standards, prévus pour une alimentation de 12 V à 14 V, notamment les batteries au plomb, a été développée une architecture dite "14 + X", ou "micro-hybride".

Cette architecture consiste donc en un réseau électrique de puissance reliant l'alterno-démarreur à un élément de stockage d'énergie électrique fonctionnant à une tension supérieure à 14 V, pouvant atteindre 48 V, et en un réseau électrique de service reliant tous les autres équipements. L'adaptation des niveaux de tensions entre les deux réseaux est assurée par un convertisseur continu/ continu réversible.

Dans un second temps, des considérations écologiques, ont conduit à concevoir des alterno-démarreurs ayant une puissance, de l'ordre de 8 à 10 KW, suffisante pour entraîner le véhicule à faible vitesse, par exemple en environnement urbain.

De telles puissances n'ont pu être obtenues tout en conservant des machines électriques compactes qu'en portant la tension du réseau électrique de puissance à une tension bien supérieure à la tension nominale de 12V des batteries au plomb classiques, généralement à une tension pouvant aller jusqu'à une soixantaine de volts au maximum.

Par ailleurs, des réseaux de puissance à des tensions allant jusqu'à 120V peuvent être mis en œuvre dans une architecture qui permet au véhicule d'être entraîné à pleine vitesse par le moteur électrique (architecture dite "full-hybrid" en terminologie anglaise, par comparaison à l'architecture précédente dite "mild-hybrid").

Dans l'état actuel de la technique, des contraintes de fiabilité du convertisseur continu/ continu réversible haute tension, d'agencement sous le capot moteur, ou de coût imposent souvent le maintien de l'alternateur habituel dans le réseau électrique de service.

Pour les mêmes raisons et, en outre, les caractéristiques de charge/ décharge spécifiques des batteries au plomb, un démarreur conventionnel alimenté par le réseau de service et la batterie au plomb reste souvent un équipement standard.

Afin de réaliser les fonctions propres au véhicules hybrides rappelées ci-dessus, une puissance importante est fournie essentiellement par l'élément de stockage du réseau de puissance.

De la sorte, cet élément de stockage est soumis à des contraintes sévères, et l'on utilise habituellement des batteries lithium-ion.

Un tel élément de stockage doit comporter une très faible résistance interne pour éviter des pertes de tension pendant les phases de décharges et des surtensions pendant les phases de charge, et, en même temps, il doit présenter un niveau d'énergie suffisant pour être capable de fournir l'énergie dans une phase de roulage en mode uniquement électrique (dite "ZEV" en terminologie anglaise, pour "zero émission vehicle").

Ces spécifications sont difficilement satisfaites par des batteries lithium-ion d'un coût acceptable, et une nouvelle contrainte économique s'ajoute donc quand il s'agit de sélectionner cet élément de stockage.

Pendant une phase de freinage récupératif, l'énergie restituée doit être dirigée vers la batterie haute tension, et si possible vers la batterie basse tenson. Inversement, pendant des phases d'assistance en couple ou ZEV, l'énergie doit provenir de la batterie haute tension et/ou de la batterie haute tension.

Ces batteries peuvent toutes présenter une grande résistance interne qui conduit à des pertes par dissipation thermique importantes.

Le document DE102004036042A1 décrit un procédé d'alimentation électrique d'un véhicule automobile à

2

double stockeurs d'énergie électrique.

Le document US 2009/212626 A1 décrit un procédé d'alimentation électrique selon le préambule de la revendication 1.

**DESCRIPTION GENERALE DE L'INVENTION.**

Dans ces circonstances, la présente invention vise donc à trouver une stratégie de gestion de l'énergie électrique et un couple de batteries haute et basse tensions et tendant à limiter ces pertes. Selon l'invention, il est donc proposé un procédé d'alimentation électrique selon la revendication 1, un système d'alimentation électrique selon la revendication 4, et une unité électronique de commande selon la revendication 8. Des modes particuliers de réalisation de l'invention sont proposés dans les revendications dépendantes.

L'invention concerne de manière générale un procédé d'alimentation électrique d'un véhicule automobile hybride à double stockeurs.

Ce procédé est du type de ceux connus en soi consistant à munir le véhicule, d'une part, d'un réseau électrique de puissance comprenant un moteur/ générateur électrique et un premier stockeur d'énergie électrique présentant une première tension nominale et, d'autre part, d'un réseau électrique de service comprenant un second stockeur d'énergie électrique présentant une seconde tension nominale inférieure à la première tension nominale, le réseau électrique de puissance et le réseau de service étant reliés entre eux par un convertisseur continu/ continu réversible.

Le procédé selon l'invention est remarquable en ce que l'on détermine une première intensité optimale circulant dans le premier stockeur et une seconde intensité optimale circulant dans le second stockeur en fonction de paramètres de fonctionnement de ces stockeurs de manière à minimiser des pertes par dissipation thermique.

Ces première et seconde intensités optimales sont en outre avantageusement déterminées en fonction d'un rendement du convertisseur continu/ continu réversible.

De préférence, on détermine également ces première et seconde intensités optimales en fonction d'une intensité de fonctionnement circulant dans une branche du réseau électrique de puissance comprenant le moteur/ générateur.

Dans le procédé d'alimentation électrique d'un véhicule automobile hybride à double stockeurs d'énergie électrique selon l'invention, les paramètres de fonctionnement des stockeurs pris en compte sont préférentiellement des paramètres électriques d'une batterie lithium-ion et d'une batterie nickel-zinc.

L'invention concerne aussi un système d'alimentation électrique d'un véhicule automobile hybride à double stockeurs d'énergie électrique apte à la mise en œuvre du procédé décrit ci-dessus.

Ce système comporte, selon une architecture connue, d'une part, un réseau électrique de puissance comprenant un moteur/ générateur électrique et un premier stockeur d'énergie électrique présentant une première tension nominale, et, d'autre part, un réseau électrique de service comprenant un second stockeur d'énergie électrique présentant une seconde tension nominale inférieure à cette première tension nominale, le réseau électrique de puissance étant relié au réseau de service par un convertisseur continu/ continu réversible.

Le système d'alimentation électrique d'un véhicule automobile hybride à double stockeurs d'énergie électrique selon l'invention est remarquable en ce qu'il comprend en outre une unité électronique de commande qui contrôle une intensité de consigne circulant dans le convertisseur continu/ continu réversible en fonction des paramètres de fonctionnement des premier et second stockeurs d'énergie électrique.

Le second stockeur d'énergie électrique de ce système est choisi de façon à présenter fort avantageusement:

- une courbe de décharge sensiblement plate entre 20% et 80% d'une capacité nominale;
- un nombre de cycles charge/ décharge supérieur à 1000;
- un rendement faradique sensiblement supérieur ou égal à 99%;
- une densité de puissance à basse température supérieure à 480W/kg.

Il s'agira de préférence d'une batterie nickel-zinc.

L'invention concerne également une unité électronique de commande apte à être intégrée dans le système d'alimentation électrique d'un véhicule automobile hybride à double stockeurs d'énergie électrique décrit précédemment.

Cette unité électronique de commande est remarquable en ce qu'elle comprend une mémoire électronique comportant des données représentatives des paramètres de fonctionnement des premier et second stockeurs d'énergie électrique et un code informatique représentatif du procédé selon l'invention.

Dans le cadre de l'invention, un véhicule automobile hybride sera également avantageusement pourvu du système d'alimentation électrique à double stockeurs d'énergie électrique décrit ci-dessus.

Ces quelques spécifications essentielles auront rendu évidents pour l'homme de métier les avantages apportés par le procédé et le système d'alimentation électrique redondante d'un véhicule automobile hybride par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1** est un schéma électrique d'un système d'alimentation électrique d'un véhicule automobile hybride à double stockeurs selon l'invention.

Les **Figures 2a, 2b et 2c** illustrent les paramètres de fonctionnement d'une batterie nickel-zinc mise en œuvre comme second stockeur d'énergie dans un mode de réalisation préféré de l'invention.

## DESCRIPTION DES MODES DE REALISATION PREFERES DE L'INVENTION.

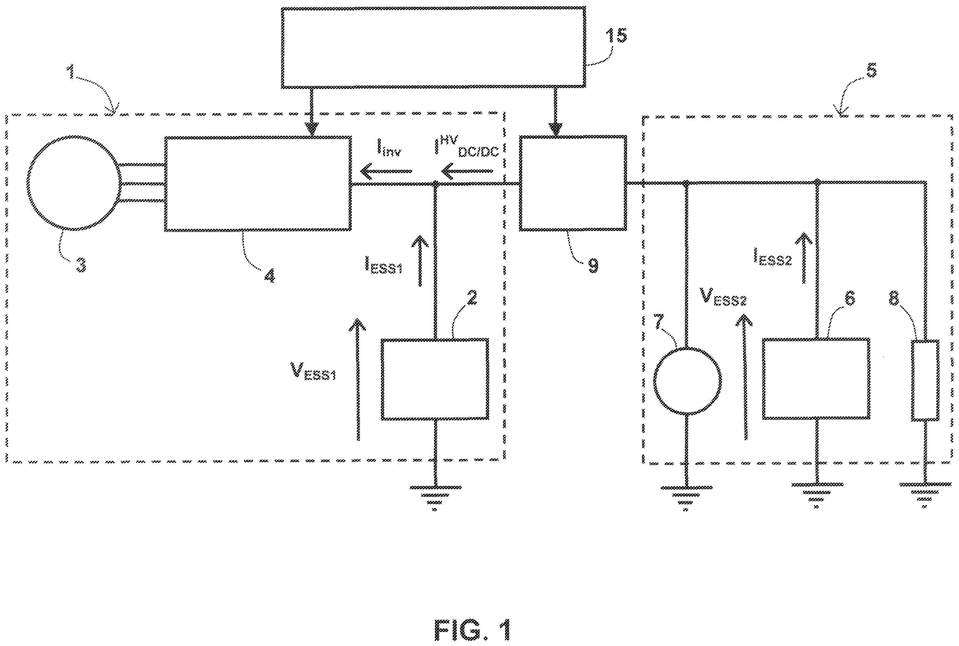

Un rappel, en liaison avec la **Figure 1,** des caractéristiques d'un système d'alimentation électrique d'un véhicule automobile hybride connu de l'état de la technique dans une architecture dite "mild-hybrid", permettra de bien comprendre l'apport de l'invention.

La **Figure 1** montre schématiquement un premier réseau électrique de puissance 1 comprenant un premier stockeur d'énergie électrique 2 et un moteur/ générateur électrique 3.

Le plus souvent, ce moteur/ générateur 3 est une machine triphasée comprenant un rotor comportant un bobinage d'excitation et un stator comportant des enroulements de phases.

Quand le moteur/ générateur 3 est en mode moteur, un circuit d'excitation fournit un courant d'excitation au rotor et un convertisseur continu/ alternatif 4 fonctionnant en onduleur alimente les enroulements de phases du stator à partir du premier stockeur d'énergie électrique 2.

Quand le moteur/ générateur 3 est en mode générateur, le convertisseur continu/ alternatif 4 fonctionne en redresseur synchrone et le circuit d'excitation contrôle la tension de charge du premier stockeur d'énergie électrique 2.

La **Figure 1** montre schématiquement un réseau électrique de service 5 comprenant un second stockeur d'énergie électrique 6 connecté en permanence, et un démarreur 7 ou d'autres charges électriques 8 actionnés à la demande.

Selon l'état de la technique connu, ce second stockeur 6 est généralement une batterie au plomb standard alimentant au moment de la mise de contact un démarreur 7 également standard.

L'élément de stockage de l'énergie électrique 2 est fréquemment une batterie lithium-ion de capacité faible (voire moyenne) et d'une première tension nominale élevée, par exemple 48 V.

Comme le montre bien la **Figure 1,** le réseau électrique de puissance 1 et le réseau électrique de service 5 sont reliés entre eux.

Le réseau électrique de puissance 1 peut fournir de l'énergie électrique au réseau électrique de service 5 et charger la batterie au plomb 6, tandis que le réseau de service 5 peut réciproquement fournir de l'énergie électrique au réseau de puissance 1, par exemple quand la batterie au lithium 2 est déchargée.

La tension limite de décharge d'une batterie au lithium 2 d'un type courant ayant une première tension nominale de 48 V est d'environ 35 V et sa tension maximale d'environ 60 V.

Une tension aux bornes d'une batterie au plomb 6 d'une seconde tension nominale de 12 V varie entre environ 11 V quand elle est déchargée et environ 14 V quand elle est chargée.

Un convertisseur continu/ continu réversible 9 assure donc l'adaptation des niveaux de tensions entre les deux réseaux électriques 1, 5

Ce convertisseur 9 est généralement un convertisseur à semi-conducteurs à découpage monté en "masse commune" avec les deux batteries 2, 6.

De la sorte une intensité de fonctionnement $I_{inv}$ circulant dans la branche du réseau électrique de puissance 1 comprenant le moteur/ générateur 3 en série avec le convertisseur alternatif/ continu 4, se répartit entre une première intensité $I_{EES1}$ dans le premier stockeur d'énergie électrique 2 et une intensité d'alimentation $I^{HV}_{DC/DC}$ servant à fournir au second stockeur d'énergie électrique 6 une seconde intensité $I_{EES2}$ au travers du convertisseur continu/ continu réversible 9.

Ces différentes intensités circulant dans les différents éléments électriques des réseaux de puissance et de service 5, notamment les stockeurs 2, 6, produisent des pertes par dissipation thermique que le procédé selon l'invention tend à minimiser en contrôlant leur répartition entre les deux réseaux 1,5.

En se référant à la **Figure 1,** la puissance totale dissipée peut être déterminée par les équations suivantes:

$$I_{inv} = I_{ESS1} + I^{HV}_{DC/DC}$$

avec

$I_{inv}$ : intensité de fonctionnement du convertisseur CA/ CC réversible 4

$I_{ESS1}$ : première intensité dans le premier stockeur d'énergie électrique 2 à optimiser $I^{HV}_{DC/DC}$ : intensité d'alimentation en entrée du convertisseur CC/ CC 9

$$V_{ESS1} . I^{HV}_{DC/DC} = \eta . V_{ESS2} . I_{ESS2}$$

avec:

$V_{ESS1}$ : première tension de fonctionnement du premier stockeur d'énergie électrique 2
$\eta$ : rendement du convertisseur CC/CC réversible 9
$V_{ESS2}$ : seconde tension de fonctionnement du second stockeur d'énergie électrique 6
$I_{ESS2}$ : seconde intensité dans le second stockeur d'énergie électrique 6 à optimiser Il vient alors:

$$P = R_{ESS1} . I^2_{ESS1} + (1 - \eta) . V_{ESS2} . I_{ESS2} + r_{ESS2} . I^2_{ESS2}$$

avec:

P = pertes totales dans le système
$R_{ESS1}$ : première résistance interne du premier stockeur d'énergie électrique 2
$r_{ESS2}$ : deuxième résistance interne du second stockeur d'énergie électrique 6 ou encore:

$$P = R_{ESS1} . \left( I_{inv} - I^{HV}_{DC/DC} \right)^2 + (1 - \eta) . V_{ESS2} . I_{ESS2} + r_{ESS2} \left( \frac{V_{ESS1} . I^{HV}_{DC/DC}}{\eta V_{ESS2}} \right)^2$$

La puissance s'exprime ainsi simplement en fonction de $I^{HV}_{DC/DC} = I$. Cette fonction doit être dérivée pour chercher un minimum de pertes et une intensité de consigne I correspondante.

Ce minimum est obtenu pour $\dfrac{dP}{dI} = 0$, c'est-à-dire:

$$I = \frac{1}{2} \left[ \frac{2 R_{ESS1} \cdot I_{inv} - (\frac{1}{\eta} - 1) V_{ESS1}}{R_{ESS1} + r_{ESS2} \cdot \dfrac{V^2_{ESS1}}{\eta^2 \cdot V^2_{ESS2}}} \right]$$

Les première et seconde intensité optimales $I_{ESS1}$, $I_{ESS2}$ circulant, respectivement, dans les premier et second stockeurs d'énergie électrique 2, 6, c'est-à-dire celles minimisant les pertes par dissipation thermique sont donc:

$$I_{ESS1} = I_{inv} - I$$

$$I_{ESS2} = \frac{V_{ESS1} . I}{\eta . V_{ESS2}}$$

L'exemple suivant montre l'application du procédé selon l'invention à une architecture de type "mild-hybrid" classique comprenant un premier stockeur d'énergie électrique 2 constitué par une batterie lithium-ion haute tension dans le réseau de puissance 1 et un second stockeur d'énergie électrique 6 constitué par une batterie au plomb basse tension dans le réseau de service 5.

Les paramètres de fonctionnement des premier et second stockeurs 2, 6 sont, dans le cas d'une décharge:

$R_{ESS1} = 35m\Omega$
$r_{ESS2} = 5m\Omega$
$V_{ESS1} = 48V$
$V_{ESS2} = 14V$
$I_{inv} = 250A$
$\eta = 0.95$

En fonction des ces paramètres de fonctionnement, le calcul montre que l'intensité de consigne est I = 95 A et il s'ensuit que la première intensité optimale qui circule dans la batterie lithium-ion 2 est, en appliquant les formules précédentes, 250 A - 95 A = 155 A.

On peut donc conclure qu'une stratégie optimale de gestion de l'énergie pour éviter les pertes, déterminée par le procédé selon l'invention, consiste à obtenir 155 A de la batterie lithium-ion 2 et le reste de la batterie au plomb 6 au travers du convertisseur CC/CC réversible 9.

Cela signifie aussi incidemment qu'une puissance "idéale" de ce convertisseur 9 doit être de 4,5 kW (95A*48V).

Néanmoins, dans des conditions de charge, l'efficacité de charge à fort courant d'une batterie au plomb est relativement faible, et sa résistance intrinsèque augmente rapidement, ce qui conduit à un dégagement de chaleur et à une baisse du rendement du système global.

Les calculs des pertes par dissipation thermique précédents suggèrent par conséquent de remplacer la batterie au plomb par un autre type de second stockeur d'énergie électrique 6 dans le réseau électrique de service 5.

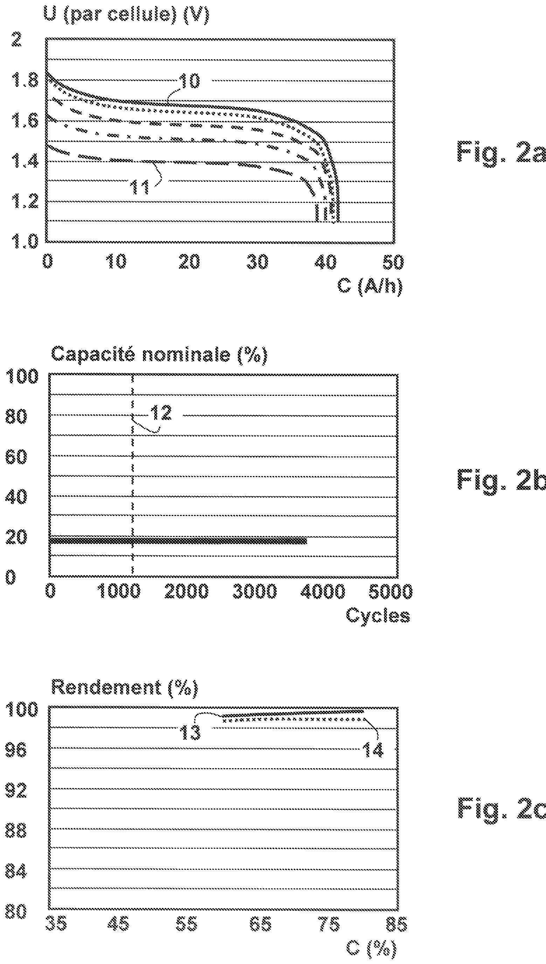

De préférence, ce second stockeur d'énergie électrique 6 est une batterie nickel-zinc qui présente des paramètres de fonctionnement intéressants comme le montrent bien les **Figures 2a, 2b et 2c:**

- une courbe de décharge sensiblement plate entre 20% et 80% d'une capacité nominale **(Figure 2a),** dans une large plage de courant de décharge, allant de 0.2 fois la capacité nominale (courbe en trait plein 10) à 10 fois la capacité nominale (courbe en tiret 12);
- un nombre de cycles charge/ décharge (à environ 20% de la capacité nominale) supérieur à une limite 12 d'environ 1000 correspondant à la durée de vie des meilleures batteries au plomb **(Figure 2b);**
- un rendement faradique sensiblement supérieur ou égal à 99% **(Figure 2c),** pour des températures de fonctionnement comprises entre 25° (courbe en trait plein 13) et 55°(courbe en pointillé 14).
- une densité de puissance à basse température supérieure à 480W/kg.

Le **tableau I** suivant établit, à titre d'exemple, une comparaison entre un modèle de batterie au plomb et un modèle de batterie nickel-zinc disponibles sur le marché:

**Tableau I**

| Paramètre | Batterie Pb | Batterie Ni-Zn |
|---|---|---|
| Facteur de forme | parallélépipédique | parallélépipédique |
| Tension nominale | 12 V | 12.8 V |
| Capacité nominale | 60 Ah | 40 Ah |
| Energie totale | 720 Wh | 512 Wh |
| Densité massique d'énergie | 35Wh/ kg | 69 Wh/ kg |
| Masse nue | 20.6 Kg | 7.4 Kg |

Le procédé d'alimentation électrique d'un véhicule automobile hybride à double stockeurs d'énergie électrique 2, 6 décrit ci-dessus est implémenté par une unité électronique de commande 15 qui contrôle les transferts d'énergie entre le réseau de puissance 1 et le réseau de service 5.

Cette unité électronique de commande 15 permet de minimiser les pertes par dissipation thermique dans l'alimentation électrique du véhicule en imposant au convertisseur CC/CC réversible 9 un point de fonctionnement résultant des calculs effectués à partir des paramètres de fonctionnement des premier et second stockeurs d'énergie électrique 2, 6 tels qu'exposés en détail précédemment.

Dans l'exemple donné, ce point de fonctionnement est 95 A @ 48 V. Il résulte du calcul de l'intensité de consigne en fonction notamment des première et seconde résistances internes de la batterie Li-Ion 2 et de la batterie au plomb 6.

Pour effectuer ces calculs, l'unité électronique de commande 15 comprend, de manière connue en soi, un microcontrôleur associé à une mémoire électronique.

Comme il va de soi l'invention ne se limite pas aux seuls modes d'exécution préférentiels décrits ci-dessus.

Une description analogue pourrait porter sur des types de moteurs/ générateurs électriques et des stockeurs d'énergie électrique 2, 6 différents de ceux spécifiés.

Notamment, le premier stockeur d'énergie électrique 2 est, alternativement à une batterie lithium-ion, une batterie à haute température à sels fondus de type "Zébra" (Sodium/ chlorure de nickel), ou bien, si le niveau d'énergie requis est faible, une ultra-capacité de type EDLC (acronyme anglais pour "Electric Double Layer Capacitor" c'est-à-dire "capacité électrique à double couche").

De même, bien que le type de second stockeur d'énergie électrique 6 optimum soit une batterie nickel-zinc, alternativement une batterie NiMH est avantageuse.

Le moteur/ générateur 3 est aussi, alternativement à une machine à excitation, une machine à aimants permanents, voire une machine hybride. Dans d'autres variantes du réseau de puissance, le moteur/ générateur 3 est une machine à courant continu qui ne nécessite pas d'onduleur 4.

L'invention embrasse donc toutes les variantes possibles de réalisation dans la mesure où ces variantes restent dans le cadre défini par les revendications ci-après.

## Revendications

1. Procédé d'alimentation électrique d'un véhicule automobile hybride à double stockeurs d'énergie électrique (2, 6) du type de ceux consistant à munir ledit véhicule, d'une part, d'un réseau électrique de puissance (1) comprenant un moteur/ générateur électrique (3) et un premier stockeur d'énergie électrique (2) présentant une première tension nominale et, d'autre part, d'un réseau électrique de service (5) comprenant un second stockeur d'énergie électrique (6) présentant une seconde tension nominale inférieure à ladite première tension nominale, ledit réseau électrique de puissance (1) et ledit réseau de service (5) étant reliés entre eux par un convertisseur continu/ continu réversible (9), procédé dans lequel on détermine une première intensité optimale ($I_{ESS1}$) circulant dans ledit premier stockeur (2) et une deuxième intensité optimale ($I_{ESS2}$) circulant dans ledit second stockeur (6) en fonction de paramètres de fonctionnement desdits premier et second stockeurs d'énergie électrique (2, 6) de manière à minimiser des pertes par dissipation thermique, ledit procédé étant **caractérisé en ce que** l'on détermine en outre lesdites première et seconde intensités optimales ($I_{ESS1}$, $I_{ESS2}$) en fonction d'un rendement dudit convertisseur continu/ continu réversible (9) et en fonction d'une intensité de fonctionnement ($I_{inv}$) circulant dans une branche dudit réseau électrique de puissance (1) comprenant ledit moteur/ générateur (3).

2. Procédé d'alimentation électrique d'un véhicule automobile hybride à double stockeurs d'énergie électrique (2, 6) selon la revendication précédente, **caractérisé en ce que** l'on détermine en outre lesdites première et seconde intensités optimales ($I_{ESS1}$, $I_{ESS2}$) par les relations:

$$I_{ESS1} = I_{inv} - I$$

$$I_{ESS2} = \frac{V_{ESS1}.I}{\eta.V_{ESS2}}$$

où I est une intensité de consigne donnée par l'expression:

$$I = \frac{1}{2}\left[\frac{2R_{ESS1} \cdot I_{inv} - (\frac{1}{\eta} - 1)V_{ESS1}}{R_{ESS1} + r_{ESS2} \cdot \frac{V_{ESS1}^2}{\eta^2 \cdot V_{ESS2}^2}}\right]$$

dans laquelle:

$R_{ESS1}$ est une première résistance interne dudit premier stockeur d'énergie électrique (2)
$r_{ESS2}$ est une seconde résistance interne dudit second stockeur d'énergie électrique (6)
$I_{inv}$ est ladite intensité de fonctionnement
$\eta$ est ledit rendement
$V_{ESS1}$ est une première tension de fonctionnement dudit premier stockeur d'énergie électrique (2)
$V_{ESS2}$ est une seconde tension de fonctionnement dudit second stockeur d'énergie électrique (6)

**3.** Procédé d'alimentation électrique d'un véhicule automobile hybride à double stockeurs d'énergie électrique (2, 6) selon l'une quelconque des revendications 1 à 2 précédentes, **caractérisé en ce que** lesdits paramètres de fonctionnement sont des paramètres électriques d'une batterie lithium-ion et d'une batterie nickel-zinc.

**4.** Système d'alimentation électrique d'un véhicule automobile hybride à double stockeurs d'énergie électrique (2, 6) apte à la mise en œuvre du procédé selon la revendication 2 du type de ceux comportant, d'une part, un réseau électrique de puissance (1) comprenant un moteur/ générateur électrique (3) et un premier stockeur d'énergie électrique (2) présentant une première tension nominale, et, d'autre part, un réseau électrique de service (5) comprenant un second stockeur d'énergie électrique (6) présentant une seconde tension nominale inférieure à ladite première tension nominale, ledit réseau électrique de puissance (1) étant relié audit réseau de service (5) par un convertisseur continu/ continu réversible (9), ledit système comprenant en outre une unité électronique de commande (15) contrôlant une intensité de consigne circulant dans ledit convertisseur continu/ continu réversible (9) en fonction de paramètres de fonctionnement desdits premier et second stockeurs d'énergie électrique (2, 6).

**5.** Système d'alimentation électrique d'un véhicule automobile hybride à double stockeurs d'énergie électrique (2, 6) selon la revendication 4 dans lequel lesdits paramètres de fonctionnement sont des paramètres électriques d'une batterie lithium-ion et d'une batterie nickel-zinc.

**6.** Système d'alimentation électrique d'un véhicule automobile hybride à double stockeurs d'énergie électrique (2, 6) selon la revendication 4 ou 5, **caractérisé en ce que** ledit second stockeur d'énergie électrique (6) présente:

- une courbe de décharge (10,11) sensiblement plate entre 20% et 80% d'une capacité nominale;
- un nombre de cycles charge/ décharge supérieur à 1000 (12);
- un rendement faradique sensiblement supérieur ou égal à 99% (13, 14);
- une densité de puissance à basse température supérieure à 480W/kg.

**7.** Système d'alimentation électrique d'un véhicule automobile hybride à double stockeurs d'énergie électrique (2, 6) selon la revendication 6 précédente, **caractérisé en ce que** ledit second stockeur d'énergie électrique (6) est une batterie nickel-zinc.

**8.** Unité électronique de commande (15) apte à être intégrée dans un système d'alimentation électrique d'un véhicule automobile hybride à double stockeurs d'énergie électrique (2, 6) selon l'une quelconque des revendications 4 à 7 précédentes, comprenant une mémoire électronique comportant des données représentatives des paramètres de fonctionnement desdits premier et second stockeurs d'énergie électrique (2, 6) et un code informatique pour réaliser les étapes de détermination du procédé selon l'une quelconque des revendications 1 à 3 précédentes.

**9.** Véhicule automobile hybride comprenant un système d'alimentation électrique à double stockeurs d'énergie électrique (2, 6) selon l'une quelconque des revendications 4 à 7 précédentes.

**Patentansprüche**

**1.** Verfahren zur Stromversorgung eines Hybridkraftfahrzeugs mit zwei Stromspeichern (2, 6) von der Art derjenigen, die darin bestehen, das Fahrzeug zum einen mit einem elektrischen Leistungsnetz (1) auszustatten, das einen elektrischen Motor/Generator (3) und einen ersten Stromspeicher (2), der eine erste Nennspannung aufweist, umfasst, und zum anderen mit einem elektrischen Servicenetz (5), das einen zweiten Stromspeicher (6), der eine zweite Nennspannung aufweist, die geringer als die erste Nennspannung ist, umfasst, wobei das elektrische Leistungsnetz (1) und das Servicenetz (5) untereinander über einen umkehrbaren Gleichstrom-Gleichstrom-Wandler (9) verbunden sind, wobei man bei dem Verfahren eine erste optimale Stromstärke ($I_{ESS1}$), die in dem ersten Speicher (2) fließt, und eine zweite optimale Stromstärke ($I_{ESS2}$), die in dem zweiten Speicher (6) fließt, in Abhängigkeit von Betriebsparametern des ersten und des zweiten Energiespeichers (2, 6) derart bestimmt, dass die Verluste durch Wärmeabgabe minimiert werden, wobei das Verfahren **dadurch gekennzeichnet ist, dass** man ferner die erste und die zweite optimale Stromstärke ($I_{ESS1}$, $I_{ESS2}$) in Abhängigkeit von einem Wirkungsgrad des umkehrbaren Gleichstrom-Gleichstrom-Wandlers (9) und in Abhängigkeit von einer Betriebsstromstärke ($I_{inv}$) bestimmt, die in einem Zweig des elektrischen Leistungsnetzes (1) fließt, der den Motor/Generator (3) umfasst.

2. Verfahren zur Stromversorgung eines Hybridkraftfahrzeugs mit zwei Stromspeichern (2, 6) nach dem vorhergehenden Anspruch, **dadurch gekennzeichnet, dass** man ferner die erste und die zweite optimale Stromstärke ($I_{ESS1}$, $I_{ESS2}$) durch die folgenden Gleichungen bestimmt:

$$I_{ESS1} = I_{inv} - I$$

$$I_{ESS2} = \frac{V_{ESS1} \cdot I}{\eta \cdot V_{ESS2}}$$

wobei I eine Sollstromstärke ist, die durch die folgende Gleichung gegeben ist:

$$I = \frac{1}{2}\left[\frac{2R_{ESS1} \cdot I_{inv} - (\frac{1}{\eta} - 1)V_{ESS1}}{R_{ESS1} + r_{ESS2} \cdot \frac{V_{ESS1}^2}{\eta^2 \cdot V_{ESS2}^2}}\right]$$

in der:

$R_{ESS1}$ ein erster Innenwiderstand des ersten Stromspeichers (2) ist
$r_{ESS2}$ ein zweiter Innenwiderstand des zweiten Stromspeichers (6) ist
$I_{inv}$ die Betriebsstromstärke ist
$\eta$ der Wirkungsgrad ist
$V_{ESS1}$ eine erste Betriebsspannung des ersten Stromspeichers (2) ist
$V_{ESS2}$ eine zweite Betriebsspannung des zweiten Stromspeichers (6) ist.

3. Verfahren zur Stromversorgung eines Hybridkraftfahrzeugs mit zwei Stromspeichern (2, 6) nach einem der vorhergehenden Ansprüche 1 bis 2, **dadurch gekennzeichnet, dass** die Betriebsparameter elektrische Parameter einer Lithium-Ionen-Batterie und einer Nickel-Zink-Batterie sind.

4. System zur Stromversorgung eines Hybridkraftfahrzeugs mit zwei Stromspeichern (2, 6), das zur Ausführung des Verfahrens nach Anspruch 2 geeignet ist, von der Art derjenigen, die zum einen ein elektrisches Leistungsnetz (1) aufweisen, das einen elektrischen Motor/Generator (3) und einen ersten Stromspeicher (2), der eine erste Nennspannung aufweist, umfasst, und zum anderen ein elektrisches Servicenetz (5), das einen zweiten Stromspeicher (6), der eine zweite Nennspannung aufweist, die geringer als die erste Nennspannung ist, umfasst, wobei das elektrische Leistungsnetz (1) mit dem Servicenetz (5) über einen umkehrbaren Gleichstrom-Gleichstrom-Wandler (9) verbunden ist, wobei das System ferner eine elektronische Steuerungseinheit (15) umfasst, die eine in dem umkehrbaren Gleichstrom-Gleichstrom-Wandler (9) fließende Sollstromstärke in Abhängigkeit von Betriebsparametern des ersten und des zweiten Stromspeichers (2, 6) regelt.

5. System zur Stromversorgung eines Hybridkraftfahrzeugs mit zwei Stromspeichern (2, 6) nach Anspruch 4, bei dem die Betriebsparameter elektrische Parameter einer Lithium-Ionen-Batterie und einer Nickel-Zink-batterie sind.

6. System zur Stromversorgung eines Hybridkraftfahrzeugs mit zwei Stromspeichern (2, 6) nach Anspruch 4 oder 5, **dadurch gekennzeichnet, dass** der zweite Stromspeicher (6) aufweist:

- eine zwischen 20 % und 80 % einer Nennkapazität im Wesentlichen flache Entladekennlinie (10, 11);
- eine Anzahl von Lade-/Entladezyklen von mehr als 1000 (12) ;
- einen faradayschen Wirkungsgrad von im Wesentlichen größer oder gleich 99 % (13, 14);

- eine Leistungsdichte bei niedriger Temperatur von mehr als 480 W/kg.

7. System zur Stromversorgung eines Hybridkraftfahrzeugs mit zwei Stromspeichern (2, 6) nach dem vorhergehenden Anspruch 6, **dadurch gekennzeichnet, dass** der zweite Stromspeicher (6) eine Nickel-Zink-Batterie ist.

8. Elektronische Steuerungseinheit (15), die geeignet ist, in ein Stromversorgungssystem eines Hybridkraftfahrzeugs mit zwei Stromspeichern (2, 6) nach einem der vorhergehenden Ansprüche 4 bis 7 integriert zu werden, umfassend einen elektronischen Speicher, der Daten, die für die Betriebsparameter des ersten und des zweiten Stromspeichers (2, 6) repräsentativ sind, und einen Computercode zum Ausführen der Schritte zum Bestimmen des Verfahrens nach einem der vorhergehenden Ansprüche 1 bis 3 enthält.

9. Hybridkraftfahrzeug mit einem Stromversorgungssystem mit zwei Stromspeichern (2, 6) nach einem der vorhergehenden Ansprüche 4 bis 7.

## Claims

1. Electrical power supply method for a hybrid motor vehicle with two electrical energy storage devices (2, 6) of the type consisting in providing said vehicle both with an electrical power network (1) comprising an electric motor-generator (3) and a first electrical energy storage device (2) having a first nominal voltage, and with an electrical service network (5) comprising a second electrical energy storage device (6) having a second nominal voltage that is lower than said first nominal voltage, said electrical power network (1) and said electrical service network (5) being connected to one another by a reversible DC-to-DC converter (9), in which method a first optimal current ($I_{ESS1}$), flowing through said first storage device (2), and a second optimal current ($I_{ESS2}$), flowing through said second storage device (6), are determined according to operating parameters of said first and second electrical energy storage devices (2, 6) so as to minimize losses through thermal dissipation, said method being **characterized in that** said first and second optimal currents ($I_{ESS1}$, $I_{ESS2}$) are further determined according to an efficiency of said reversible DC-to-DC converter (9) and according to an operating current ($I_{inv}$) flowing through one branch of said electrical power network (1) comprising said motor-generator (3).

2. Electrical power supply method for a hybrid motor vehicle with two electrical energy storage devices (2, 6) according to the preceding claim, **characterized in that** said first and second optimal currents ($I_{ESS1}$, $I_{ESS2}$) are further determined using the relationships:

$$I_{ESS1} = I_{inv} - I$$

$$I_{ESS2} = \frac{V_{ESS1} \cdot I}{\eta \cdot V_{ESS2}}$$

where I is a setpoint current given by the expression:

$$I = \frac{1}{2}\left[\frac{2R_{ESS1} \cdot I_{inv} - (\frac{1}{\eta} - 1)V_{ESS1}}{R_{ESS1} + r_{ESS2} \cdot \frac{V_{ESS1}^2}{\eta^2 \cdot V_{ESS2}^2}}\right]$$

wherein:

$R_{ESS1}$ is a first internal resistance, of said first electrical energy storage device (2);
$r_{ESS2}$ is a second internal resistance, of said second electrical energy storage device (6);
$I_{inv}$ is said operating current;
$\eta$ is said efficiency;
$V_{ESS1}$ is a first operating voltage, of said first electrical energy storage device (2);
$V_{ESS2}$ is a second operating voltage, of said second electrical energy storage device (6).

3.  Electrical power supply method for a hybrid motor vehicle with two electrical energy storage devices (2, 6) according to either of the preceding Claims 1 and 2, **characterized in that** said operating parameters are electrical parameters of a lithium-ion battery and of a nickel-zinc battery.

4.  Electrical power supply system for a hybrid motor vehicle with two electrical energy storage devices (2, 6) capable of implementing the method according to Claim 2 of the type including both an electrical power network (1) comprising an electric motor-generator (3) and a first electrical energy storage device (2) having a first nominal voltage, and an electrical service network (5) comprising a second electrical energy storage device (6) having a second nominal voltage that is lower than said first nominal voltage, said electrical power network (1) being connected to said service network (5) by a reversible DC-to-DC converter (9), said system further comprising an electronic control unit (15) controlling a setpoint current flowing through said reversible DC-to-DC converter (9) according to operating parameters of said first and second electrical energy storage devices (2, 6).

5.  Electrical power supply system for a hybrid motor vehicle with two electrical energy storage devices (2, 6) according to Claim 4, wherein said operating parameters are electrical parameters of a lithium-ion battery and of a nickel-zinc battery.

6.  Electrical power supply system for a hybrid motor vehicle with two electrical energy storage devices (2, 6) according to Claim 4 or 5, **characterized in that** said second electrical energy storage device (6) exhibits:

    - a substantially flat discharge curve (10, 11) between 20% and 80% nominal capacity;
    - a number of charge/discharge cycles of greater than 1000 (12);
    - a Faraday efficiency of substantially higher than or equal to 99% (13, 14);
    - a low-temperature power density of higher than 480 W/kg.

7.  Electrical power supply system for a hybrid motor vehicle with two electrical energy storage devices (2, 6) according to the preceding Claim 6, **characterized in that** said second electrical energy storage device (6) is a nickel-zinc battery.

8.  Electronic control unit (15) suitable for being incorporated within an electrical power supply system for a hybrid motor vehicle with two electrical energy storage devices (2, 6) according to any one of the preceding Claims 4 to 7, comprising an electronic memory including data that are representative of operating parameters of said first and second electrical energy storage devices (2, 6) and a computer code for carrying out the determination steps of the method according to any one of the preceding Claims 1 to 3.

9.  Hybrid motor vehicle comprising an electrical power supply system with two electrical energy storage devices (2, 6) according to any one of the preceding Claims 4 to 7.

FIG. 1

EP 2 831 977 B1

**Fig. 2a**

**Fig. 2b**

**Fig. 2c**

**EP 2 831 977 B1**

## RÉFÉRENCES CITÉES DANS LA DESCRIPTION

**Documents brevets cités dans la description**

- DE 102004036042 A1

- US 2009212626 A1